# EUROPÄISCHE PATENTANMELDUNG

(11) **EP 1 050 767 A2**
(43) Veröffentlichungstag der Anmeldung: **08.11.2000**
(21) Anmeldenummer: 00109568.6
(22) Anmeldetag: 04.05.2000
(51) Int. Cl.: G02B 6/38

(54) **Optische Steckverbindung**

(30) Priorität: 04.05.1999 DE 19920452; 17.02.2000 DE 10007172
(71) Anmelder: SIEMENS AKTIENGESELLSCHAFT, 80333 München (DE)
(72) Erfinder: Stoll, Detlef, Dr., 81377 München (DE); Leisching, Patrick, Dr., 80802 München (DE); Bock, Harald, Dr., 86150 Augsburg (DE); Richter, Alexander, Dr., 81475 München (DE); Jäger, Hubert, Dr., 82049 Pullach (DE); Heiles, Jürgen, 81371 München (DE)

(57) **Zusammenfassung**

Die Erfindung betrifft eine optische Steckverbindung zwischen zwei jeweils einen optischen Anschluß OA1,OA2 aufweisenden optischen Leitern OL1,OL2, wobei zusätzlich zu der optischen Steckverbindung eine elektrische Verbindung zur Verifizierung der optischen Steckverbindung vorgesehen ist. Dadurch wird die Wahrscheinlichkeit einer fehlerhaft im Netzmanagementsystem NMS erfassten, optischen Steckverbindung erheblich verringert und die Fehlerlokalisation innerhalb des optischen Übertragungssystem erleichtert

## Beschreibung

Die Erfindung betrifft eine optische Steckverbindung zwischen zwei jeweils einen optischen Anschluß aufweisenden optischen Leitern und ein Verfahren zum Lösen oder Stecken optischer Steckverbindungen.

In optischen Übertragungssystemen, insbesondere in nach dem WDM-Prinzip (Wavelength Division Multiplexing) arbeitenden Übertragungssystemen, werden in optischen Netzelementen beispielsweise optischen Koppelfeldern manuell optische Verbindungen durchgeschaltet. Hierzu werden zwei jeweils einen optischen Anschluß aufweisende, optische Leiter über eine optische Steckverbindung miteinander verbunden, wobei die optische Steckverbindung einen optischen Verbindungsleiter und zwei jeweils an den Enden des optischen Verbindungsleiters angebrachte optische Steckelemente aufweist. Die optischen Steckelemente des optischen Verbindungsleiters werden in die optischen Anschlüsse der zu verbindenden optischen Leiter gesteckt und letztendlich dadurch eine optische Verbindung zwischen einem ersten optischen Leiter und einem zweiten optischen Leiter hergestellt. Zusätzlich wird die Konfiguration der optischen Steckverbindung, d.h. die jeweils einem optischen Anschluß zugeordnete Zahl der über die optische Steckverbindung verbundenen ersten und zweiten optischen Leiter, einem Netzmanagementsystem in Form von Parametern zur Verfügung gestellt. Die bestehende Konfiguration der optischen Steckverbindung kann nun mit Hilfe der im Netzmanagementsystem vorliegenden Daten mit einer Anzeigeeinheit visualisiert werden. Wird durch das Netzmanagementsystem ein Leitungsbruch des ersten optischen Leiters angezeigt, wird aufgrund der über die optische Steckverbindung bestehenden optischen Verbindung des ersten und zweiten optischen Leiters durch das Netzmanagementsystem auch auf einen Ausfall der optischen Verbindung geschlossen.

Jedoch können beim manuellen Eintragen der eine bestehende Steckverbindung bzw. die Konfiguration eines Netzwerkelements anzeigenden Parameter in eine Datenbank des Netzmanagementsystems Fehler auftreten, d.h. durch das Netzmanagentsystem wird eine nicht der Realität entsprechende Konfiguration des Netzelementes angezeigt. Die Wahrscheinlichkeit einer derartigen fehlerhaften Konfigurationsangabe ist in bislang realisierten Übertragungssystemen bedingt durch die Komplexität von WDM-Übertragungssytemen - erhebliche Anzahl von Übertragungskanälen - durchaus sehr hoch, so daß sich im Falle einer fehlerhaften Konfiguration eines Netzelements die Fehlerlokalisation äußerst aufwendig gestaltet und teilweise mit einem hohen wirtschaftlichen Aufwand verbunden ist. Zur Reduzierung der zuvor genannten Wahrscheinlichkeit einer manuellen, fehlerhaften Konfiguration sind Verfahren zur Bereitstellung eines optischen Kanals für die Übertragung von Konfigurationsdaten an das Netzmanagementsystem bekannt, wobei die Realisierung derartiger Verfahren in optischen Übertragungssystemen äußerst kostenintensiv und dadurch ein wirtschaftlicher Betrieb derartig ausgestalteter optischer Übertragungssysteme schwer realisierbar ist.

Weiterhin können beim manuellen Stecken und Lösen einer optischen Steckverbindung Fehler durch den Bediener auftreten. Dies führt dann zu einer fehlerhaften Weiterleitung von Signalen, die am Empfängerort nicht mehr ausgewertet werden können.

Die Aufgabe der vorliegenden Erfindung besteht darin, eine optische Steckverbindung der eingangs erwähnten Art so auszugestalten, daß die Wahrscheinlichkeit einer fehlerhaft im Netzmanagementsystem nachgeführten Konfiguration reduziert wird. Eine weitere Aufgabe der vorliegenden Erfindung besteht darin,
die optische Steckverbindung der eingangs erwähnten Art so auszugestalten, daß die Wahrscheinlichkeit eines fehlerhaften steckens oder Lösens einer optischen Steckverbindung durch einen Bediener nahezu ausgeschlossen wird.

Erfindungsgemäß wird die Aufgabe durch eine optische Steckverbindung der eingangs genannten Art gelöst, bei der zusätzlich zu der optischen Verbindung eine elektrische Verbindung zur Verifizierung der optischen Steckverbindung vorgesehen ist und bei der mit Hilfe der elektrischen Verbindung in dem optischen Netzelement und/oder im Netzmanagementsystem die Konfiguration der optischen Steckverbindung visualisiert wird. Vorteilhaft wird durch die zusätzliche elektrische Verbindung die Konfiguration der optischen Steckverbindung unmittelbar beim Erstellen der optischen Verbindung dem Netzmanagementsystem angezeigt, d.h. annähernd gleichzeitig mit dem Herstellen der optischen Verbindung liegen bereits die aktuellsten Konfigurationsdaten dem Netzmanagementsystem zur Bewertung bzw. Auswertung vor. Dadurch wird auf besonders vorteilhafte Weise die Wahrscheinlichkeit einer fehlerhaften manuellen Eingabe der Parameter der bestehenden Steckerkonfigurationen ins Netzmanagementsystem vermieden. Somit werden durch das optische Übertragungssystem selbst die Daten für die Repräsentation durch das Netzmanagementsystem zur Verfügung gestellt, wodurch hinsichtlich der für die Speicherung der Konfigurationsdaten auf zuwendenden wirtschaftlichen Aufwand erheblich reduziert wird. Desweiteren wird auf vorteilhafte Weise die Konfiguration eines entfernt vom Netzmanagementsystem angeordneten Netzelementes ermöglicht. Bevorzugt ist darüber hinaus ein Verriegelungsmechanismus vorgesehen, der die optische Steckverbindung unmittelbar nach dem Erstellen verriegelt oder unmittelbar vor dem Lösen entriegelt um eine fehlerhafte Verbindung zu vermeiden. Besonders bevorzugt verriegelt der Verriegelungsmechanismus auch alle die Steckverbindungen, die zwar frei sind, aber augenblicklich nicht gesteckt werden sollen. Auf diese Weise wird verhindert, daß ein Benutzer eine Verbindung herstellen kann, die nicht erwünscht ist.

Vorteilhafte Weiterbildungen und Ausbildungen der erfindungsgemäßen optischen Steckverbindung sind in den weiteren Patentansprüchen beschrieben.

Bei einem weiteren vorteilhaften Ausführungsbeispiel der vorliegenden Erfindung ist die optische Steckverbindung flexibel als optische Verbindungsleitung OVL1, OVL2 ausgestaltet. Dadurch ist es vorteilhafterweise möglich, eine optische Verbindung zwischen beliebigen Steckverbindungen herzustellen. Besonders bevorzugt ist die optische Steckverbindung als optische Steckvorrichtung OSV ausgestaltet. Hierdurch kann vorteilhafterweise durch die vorgegebene Form der Steckvorrichtung OSV eine Verbindung zwischen örtlich genau definierten optischen Anschlüssen hergestellt werden, so daß hierdurch die Gefahr von fehlerhaften Verbindungen nochmals reduziert wird.

Besonders bevorzugt wird in einem weiteren Ausführungsbeispiel ein Konfigurationssignal KS zur Bestimmung des Konfigurationszustandes übertragen. Dabei erfolgt die Übertragung des Konfigurationssignals KS durch Mittel zum Übertragen eines Konfigurationssignals. Ein Mittel zum Übertragen eines digitalen Konfigurationssignals ist besonders bevorzugt ein elektrischer Beidraht zur optischen Faser. Ganz besonders bevorzugt als Mittel zur Übertragung eines digitalen Konfigurationssignals sind Chiplabels auf beiden Steckern eines Verbindungskabels mit Inventardaten, die die Zusammengehörigkeit der beiden Stecker zu einem Kabel beinhalten.

In einem weiteren bevorzugten Ausführungsbeispiel der vorliegenden Erfindung ist eine Steuereinheit SE zur Auswertung der übertragenen beziehungsweise nicht übertragenen Kanfigurationssignale KS vorgesehen. Die Steuereinheit SE wertet die ankommenden beziehungsweise nicht ankommenden Konfigurationssignale KS aus, indem sie die Signale erfaßt, speichert und verarbeitet. Bevorzugt wird als Steuereinheit SE ein zentraler Netzelementrechner verwandt.

Eine besonders vorteilhafte Ausführungsform weist Mittel zur leitungstechnischen Konzentration LK1, LK2 der Konfigurationssignale KS für mehrere optische Leiter OL1, OL2 auf, die durch mehrere verbindende Steckverbindungen verbindbar sind. Mittel zur leitungstechnischen Konzentration LK1, LK2 sind besonders bevorzugt Mikroprozessoren oder Zeit-Multiplexer. Vorteilhaft an einer Anordnung der vorgeschlagen Weise ist eine Überschaubarkeit der Zu- und Ableitungen sowie eine verringerte Anfälligkeit für elektromagnetische Immission und Emission.

Bei einer weiteren besonders bevorzugten Ausführungsform ist eine Verriegelungseinrichtung VE vorgesehen. Mit dieser Verriegelungseinrichtung kann bevorzugt der opto-elektrische Anschluß OEA so verriegelt werden, daß ein Stecken eines optoelektrischen Steckelements OESE nicht möglich ist. Besonders bevorzugt kann durch die Verriegelungseinrichtung ein optoelektrisches steckelement OESE im gesteckten Zustand in dem opto-elektrischen Anschluß OEA so verriegelt werden, daß ein Ziehen des opto-elektrischen Steckelements OESE nicht mehr möglich ist. Die Verriegelung kann beispielsweise durch ein sich radial verengendes kreisförmiges Element erfolgen, das in die beispielsweise kreisförmige Aussparung A des optoelektrischen Steckelements OESE eingelassen wird. Denkbar wäre auch ein Verschiebemechanismus, der außerhalb des optoelektrischen Anschlusses OEA an einer Buchse B befestigt ist oder innerhalb der Buchse B in einer Aussparung plaziert ist. Im ersten Falle wäre die Aussparung A des opto-elektrischen Steckelements OESE nicht von Nöten um das opto-elektrische Kabel OEK zu verriegeln. Der Verriegelungsvorgang könnte beispielsweise durch ein Elektromotor oder einen Magneten veranlaßt werden.

Bei einem weiteren bevorzugten Ausführungsbeispiel ist der Verriegelungsvorgang durch eine zentrale Steuereinheit SE steuerbar. Hierdurch können die vorgegebenen geplanten Steckverbindungen in der Steuereinheit abgelegt werden und nacheinander abgearbeitet werden. Hierzu können alle Buchsen bzw. Ports der Steckverbindungen verriegelt werden und nur der Port entriegelt werden, der als nächster gesteckt werden soll. Damit kann der Benutzer, der eine Konfigurationsänderung vornimmt, nochmals effektiver davor geschützt werden, die Verbindung zu einem falschen Fort herzustellen. Die bereits vorgegebene Konfiguration kann so in der Steuereinheit verwaltet als Bauplan Schritt für Schritt abgearbeitet werden, ohne daß der Benutzer einen Anschluß falsch stecken könnte - da die 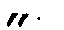 falschen" Ports alle verriegelt sind.

Besonders bevorzugt wird eine zu lösende aber gesteckte Verbindung oder eine zu steckende und noch nicht gesteckte Verbindung durch eine optische Anzeige, besonders bevorzugt eine Leuchtanzeige LED, visualisiert. Dadurch wird einem manuellen Bediener das Stecken bzw. das Lösen einer Verbindung erleichtert, da er nun die zu lösende bzw. zu steckende Verbindung angezeigt bekommen kann.

Eine bevorzugte Ausgestaltung eines erfindungsgemäßen Verfahrens besteht darin, daß die Verriegelungseinrichtung VE der zu lösenden oder steckenden Verbindung geöffnet wird und daß die Verriegelungseinrichtung VE der zu lösenden oder der zu steckenden Verbindung nach Ziehen bzw. nach Stecken der Verbindung geschlossen wird. Dadurch können Crossconnects CC auch von ungeschulten Personal manuell verschaltet werden, und die Fehlerrate kann bei der manuellen Verschaltung erheblich verringert werden.

Eine weitere bevorzugte Verfahrensform zeigt die zu lösende oder zu steckende Verbindung im Crossconnect CC mittels einer Leuchtanzeige LED an. Dadurch wird eine zu lösende oder zu steckende Verschaltung an einen Crossconnect CC visualisierbar gemacht. Damit ist es dem Bediener erheblich vereinfacht zu erkennen, welche Verbindungen am Crossconnect CC gelöst oder verschaltet werden sollen.

Die Erfindung soll im folgenden anhand von mehreren zeichnerischen Darstellungen näher erläutert werden. Dabei zeigt:
- Figur 1: den prinzipiellen Aufbau einer optischen Steckvorrichtung mit direkt steckbaren, elektrischen Steckelementen;
- Figur 2: den prinzipiellen Aufbau einer optischen Steckvorrichtung mit einem elektrischen Schaltungselement;
- Figur 3: ein optisches Steckverbindungssystem mit elektrischen Steckelementen, einer Steuereinheit und einer optischen Signalisierung;
- Figur 4: eine spezielle Ausgestaltung einer erfindungsgemäßen optischen Steckvorrichtung im gelösten Zustand;
- Figur 5: eine spezielle Ausgestaltung einer erfindungsgemäßen optischen Steckvorrichtung im gesteckten Zustand; und
- Figur 6: einen prinzipellen Aufbau eines Crossconnects mit optischen Steckfeldern (West, Nord, Ost, Süd).

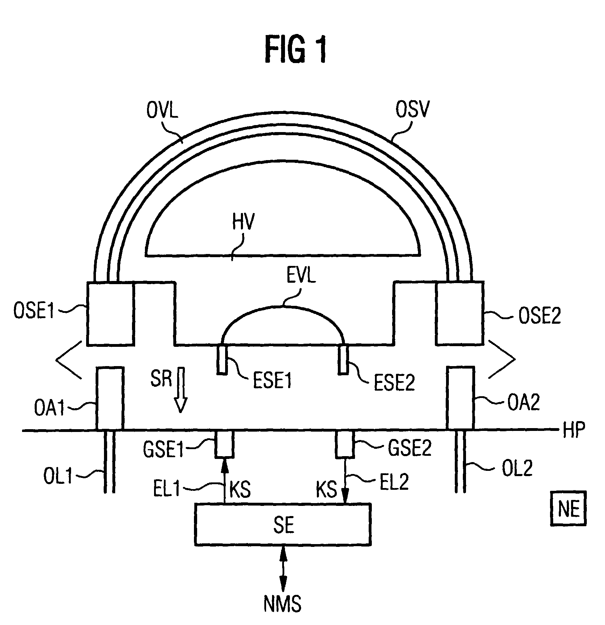

In **Figur 1** ist beispielhaft eine optische Steckverbindung anhand einer optischen Steckvorrichtung OSV und ein eine Halteplatte HP aufweisendes, optisches Netzelement NE, beispielsweise eine optische Koppeleinrichtung, dargestellt. Die optische Steckvorrichtung OSV weist einen optischen Verbindungsleiter OVL, ein erstes und zweites optisches Steckelement OSE1,OSE2, sowie einen elektrischen Verbindungsleiter EVL und ein erstes und zweites elektrisches Steckelement ESE1,ESE2 auf, wobei in Figur 1 die optische Steckvorrichtung beispielsweise die Form eines Halbkreisringes besitzt, dessen Ringenden über ein rechtecktörmiges Halbkreisverbindungselement HV verbunden sind. Der optische Verbindungsleiter OVL wird - zentriert im Halbkreisring angeordnet - von dem ersten optischen Steckelement OSE1 zum zweiten optischen Steckelement OSE2 geführt, wobei das erste und zweite optische Stekkelement OSE1,OSE2 in einer rechteckförmigen Aussparung an der unteren linken und rechten Ecke des rechteckförmigen Halbkreisverbindungselementes HV angebracht sind. Im verbleibenden rechteckförmigen Halbkreisverbindungselement HV wird der elektrische Verbindungsleiter EVL beispielsweise in einem halbkreisförmigen Bogen bzw. parallel zum optischen Verbindungsleiter OVL geführt, wobei die Enden des elektrischen Verbindungsleiters EVL mit dem ersten und dem zweiten elektrischen, an der Unterseite des rechteckförmigen Halbkreisverbindungselements angebrachten Steckelement ESE1/2 verbunden sind.

Die verbindungsindividuellen Gegenstücke der optischen Steckverbindung sind an der Halteplatte HP des Netzelementes NE angeordnet. Auf der Oberseite bzw. der Anschlußseite der Halteplatte HP sind beispielsweise ein erster und ein zweiter optischer Anschluß OA1/2 senkrecht auf der Halteplatte HP angeordnet und von der Unterseite der Halteplatte HP zugeführt ist der erste optische Leiter OL1 mit dem ersten optischen Anschluß OA1 sowie der zweite optische Leiter OL2 mit dem zweiten optischen Anschluß OA2 verbunden ist. Analog dazu sind ein erstes und zweites elektrisches Gegensteckelement GSE1/2 in der Halteplatte HP zur Aufnahme der ersten und zweiten elektrischen Steckelemente SE1/2 der optischen Steckvorrichtung OSV senkrecht zur Halteplatte angeordnet, wobei an das erste elektrische Gegensteckelement GSE1 ein erster elektrischer Leiter EL1 und an das zweite elektrische Gegensteckelement GSE2 ein zweiter elektrischer Leiter EL2 geführt sind. Der erste und zweite elektrische Leiter EL1/2 sind an eine beispielsweise im Netzeleinent NE angeordnete Steuereinheit SE angeschlossen.

Wird die optische Steckverbindung mit Hilfe der beispielhaft zuvor beschriebenen optischen Steckvorrichtung OSV in Steckrichtung SR hergestellt, so wird das erste optische Steckelement OSE1 mit dem ersten optischen Anschluß OA1 sowie das zweite optische Steckelement OSE2 mit dem zweiten optischen Anschluß OA2 verbunden und dadurch die optische Verbindung zwischen dem ersten optischen Leiter OL1 über den optische Verbindungsleiter OVL und dem zweiten optischen Leiter OF2 geschlossen. Annähernd gleichzeitig wird das erste elektrische Steckelement ESE1 in das erste elektrische Gegensteckelement GSE1 sowie das zweite elektrische Steckelement ESE2 in das zweite elektrische Gegensteckelement GSE2 gesteckt. Zusätzlich zur optischen Steckverbindung ist dadurch eine elektrische Verbindung über den ersten elektrischen Leiter EL1, den elektrischen Verbindungsleiter EVL der optischen Steckvorrichtung OSV und den zweiten elektrischen Leiter EL2 hergestellt, über die ein Konfigurationssignal KS von der Steuereinheit SE zu der Steuereinheit SE übertragen wird und in der Steuereinheit SE das Anliegen des Konfigurationssignals KS ausgewertet wird. Die durch die Auswertung des Konfigurationssignals KS in der Steuereinheit SE berechneten Informätionen über die aktuelle Konfiguration der Steckverbindung zwischen dem ersten und zweiten optischen Leiter OF1/2, d.h. ob die optische Verbindung geschaltet ist oder nicht, wird dem Netzmanagementsystem NMS in Form von Parametern angezeigt.

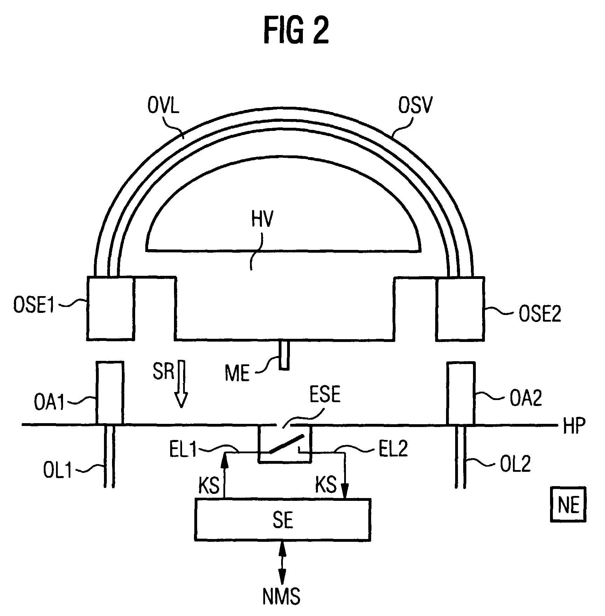

Eine weitere Ausführungsform der erfindungsgemäßen Steckverbindung ist in **Figur 2** prinzipiell dargestellt, wobei im Gegensatz zu **Figur 1** anstelle des ersten und zweiten elektrischen Steckelementes ESE1/2 ein einziges mechanisches Steckelement ME vorgesehen ist. Analog dazu entfallen das an der Unterseite der Halteplatte HP angeordnete, erste und zweite elektrische Gegensteckelement GSE1/2 und der das erste und zweite elektrische Steckelement ESE1/2 verbindende elektrische Verbindungsleiter EVL. Dafür ist im Netzelement NE in der Halteplatte HP ein elektrisches Schaltelement ESE vorgesehen, daß den ersten elektrischen Leiter EL1 mit dem zweiten elektrischen Leiter EL2 verbindet. In der Halteplatte HP, unmittelbar über den Schaltpunkt des elektrischen Schaltelementes ESE ist eine Aussparung zur Aufnahme des mechanischen Steckelementes ME der optischen Steckvorrichtung vorgesehen. Beim Stecken der optischen Verbindung wird durch das mechanische Steckelement ME das elektrische Schaltelement ESE im Netzelement NE geschaltet und somit beispielsweise eine elektrische Verbindung über den ersten elektrischen Leiter EL1 und den zweiten elektrischen Leiter EL2 hergestellt bzw. bei einer alternativen Ausführungsform beispielsweise eine elektrische Verbindung unterbrochen. Bei einer bestehenden, elektrischen Verbindung wird analog zu **Figur 1** das Konfigurationssignal von der Steuereinheit SE über den ersten und zweiten elektrischen Leiter EL1/2 zur Steuereinheit SE übermittelt, d.h. in der Steuereinheit SE wird das Anliegen des Konfigurationssignals KS ausgewertet und dem Netzmanagementsystem NMS die optische Verbindung in Form von Parametern angezeigt.

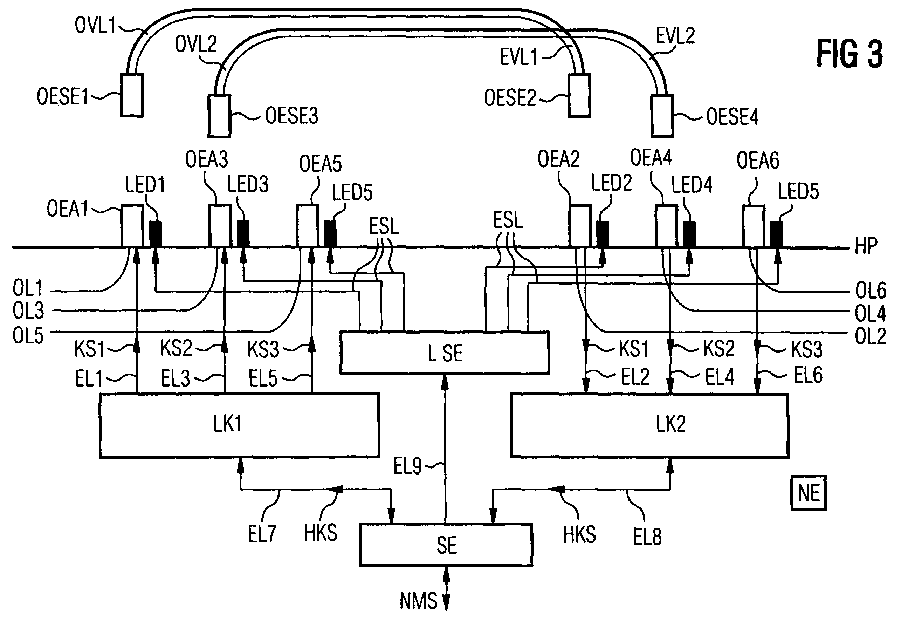

Eine weitere Ausgestaltung der erfindungsgemäßen optischen Steckverbindung ist in **Figur 3** anhand eines optischen Steckverbindungssystem dargestellt, das mehrere optische Steckverbindungen mit flexiblen optischen Verbindungsleitern OVL und zusätzlich zur Steuereinheit SE eine optische Signalisierungseinheit LSE aufweist. In Figur 3 sind beispielhaft an der Oberseite der Halteplatte HP ein erster, zweiter, dritter, vierter, fünfter und sechster opto-elektrischer Anschluß OEA1,...,OEA6 angeordnet, wobei zusätzlich parallel zu dem jeweiligen opto-elektrischen Anschluß OEA1, . . .,OEA6 vorzugsweise eine Leuchtdiode LED1,...,LED6 vorgesehen ist, d.h. es sind eine erste, zweite, dritte, vierte, fünfte und sechste Leuchtdiode LED1, . . . ,LED6 zur Anzeige des Betriebszustands des jeweiligen opto-elektrischen Anschlusses OEA1, . . . ,OEA6 an der Oberseite der Halteplatte HP angeordnet. Desweiteren sind beispielsweise im Netzelement NE ein erster und zweiter leitungstechnischer Konzentrator LK1/2, eine optische Signalisierungseinheit bzw. Leuchtdiodensteuereinheit LSE und die Steuereinheit SE vorgesehen, wobei der erste leitungstechnische Konzentrator LE1 über einen ersten elektrischen Leiter EL1 mit dem ersten opto-elektrischen Anschluß OEA1, über einen dritten elektrischen Leiter EL3 mit dem dritten optoelektrischen Anschluß OEA3 und über einen fünften elektrischen Leiter EL5 mit dem fünften opto-elektrischen Anschluß QEA5 verbunden ist. Analog dazu ist der zweite leitungstechnische Konzentrator LE2 über einen zweiten elektrischen Leiter EL2 mit dem zweiten opto-elektrischen Anschluß OEA2, über einen vierten elektrischen Leiter EL4 mit dem vierten optoelektrischen Anschluß OEA4 und über einen sechsten elektrischen Leiter EL6 mit dem sechsten opto-elektrischen Anschluß OEA6 verbunden. Darüberhinaus ist der erste leitungstechnische Konzentrator LE1 über den siebten elektrischen Leiter EL7 und der zweite leitungstechnische Konzentrator LK2 über den achten elektrischen Leiter EL8 mit der Steuereinheit SE verbunden. Von der Steuereinheit SE ist ein neunter elektrischer Leiter zu der Leuchtdiodensteuereinheit LSE geführt, wobei die erste, zweite, dritte, vierte, fünfte und sechste Leuchtdiode LED1,...,LED6 jeweils über eine elektrische Steuerleitung ESL an die Leuchtdiodensteuereinheit LSE angeschlossen ist.

Analog zu **Figur 1** und **Figur 2** sind an die opto-elektrischen Anschlüsse OEA1,...,OEA6 optische Leiter OL1,...,OL6 geführt, wobei beispielsweise der erste optische Leiter OL1 an den ersten opto-elektrischen Anschluß OEA1, der zweite optische Leiter OL2 an den zweiten opto-elektrischen Anschluß OEA2, der dritte optische Leiter OL3 an den dritten opto-elektrischen Anschluß OEA3, der vierte optische Leiter OL4 an den vierten opto-elektrischen Anschluß OEA4, der fünfte optische Leiter OVL5 an den fünften opto-elektrischen Anschluß OEA5 und der sechste optische Leiter an den sechsten opto-elektrischen Anschluß OEA6 geführt sind.

Zum Herstellen der optischen Steckverbindung sind beispielsweise ein erster und ein zweiter opto-elektrischer Verbindungsleiter OVL1/2 vorgesehen, die zusätzlich einen jeweils parallel zum optischen Verbindungsleiter OVL1/2 angeordneten bzw. in der optischen Verbindungsleitung OVL integrierten, ersten und zweiten elektrischen Verbindungsleiter EVL1/2 aufweisen. An den Enden der opto-elektrischen Verbindungsleiter OVL1/2 sind jeweils opto-elektrische Steckelemente OESE1,...,OESE4 zum Herstellen der optischen Steckverbindung zwischen beispielsweise dem ersten und zweiten opto-elektrischen Anschluß OA1/2 vorgesehen. Insbesondere weist der erste opto-elektrische Verbindungsleiter OVL1 ein erstes und ein zweites opto-elektrisches Steckelement OESE1/2 und der zweite opto-elektrische Verbindungsleiter OVL2 ein drittes und viertes opto-elektrisches Steckelement OESE3/4 auf.

Soll eine optische Verbindung zwischen beispielsweise dem dritten optischen Leiter OL3 und dem vierten optischen Leiter OL4 hergestellt werden, dann werden das dritte opto-elektrische Steckelement OESE3 des zweiten opto-elektrischen Verbindungsleiters OVL2 auf den dritten opto-elektrische Anschluß OEA3 und das vierte opto-elektrische Steckelement OESE4 auf den vierten opto-elektrischen Anschluß QEA4 gesteckt. Somit ist die optische Verbindung hergestellt. Annähernd gleichzeitig wird ein von dem ersten leitungstechnischen Konzentrator LK1 aus einem von der Steuereinheit empfangenen Hauptkonfigurationssignal durch leitungstechnische Dekonzentration gewonnenes, zweites Konfigurationssignal KS2 über den dritten elektrischen Leiter EL3, den dritten opto-elektrischen Anschluß OEA3, den zweiten elektrischen Verbindungsleiter EVL2, den vierten opto-elektrischen Anschluß OEA4 und den vierten elektrischen Leiter EL4 an den zweiten leitungstechnischen Konzentrator LK2 übertragen. Im zweiten leitungstechnischen Konzentrator LK2 wird das empfangene zweite Konfigurationssignal KS2 zusammen mit beispielsweise einem ersten, und dritten Konfigurationssignal KS1/3 zu einem Hauptkonfigurationssignal HKS leitungstechnisch konzentriert und das konzentrierte Hauptkonfigurationssignal HKS über den achten elektrischen Leiter EL8 an die Steuereinheit SE übermittelt. In der Steuereinheit SE werden das erste, zweite und dritte Konfigurationssignal KS1/2/3 ausgewertet und anhand der durch die Auswertung gewonnen Informationen die Leuchtdiodensteuereinheit LSE angesteuert. Diese wiederum schaltet anhand der von der Steuereinheit SE empfangenen Steuerbefehle die Leuchtdioden LED1, ... ,LED6 beispielsweise an oder aus bzw. grün oder rot. Hierfür sind verschiedene schaltungstechnische Realisierungen denkbar, d.h. die Visualisierung der geschalteten optischen Steckverbindungen ist keinesfalls auf das Vorsehen von Leuchtdioden LED1, . . . ,LED6 beschränkt, sondern kann auch durch andere opto-akkustische Anzeigemittel erfolgen.

Desweiteren können auch zusätzlich zu der durch die Konfigurationssignale KS1, . . . ,KS6 gewonnenen AN/AUS-Informationen über die optischen Verbindungen sogenannte "Identifiers" zur Identifizierung der einzelnen opto-elektrischen Anschlüsse OEA1,...,OEA6 mit Hilfe von zugeordneten Zahlen an die Steuereinheit SE übertragen werden, welche die Informationen - insbesondere die "Identifiers" - analog zu den in **Figur 1** und **Figur 2** beschriebenen Anordnungen wieder an das Netzmanagementsystem übermittelt. Dem Netzmanagementsystem werden somit immer die aktuellsten Konfigurationsdaten direkt aus dem optischen Übertragungssystem mitgeteilt und dadurch ist eine aktuelle und zuverlässige Visualisierung der Konfiguration des optischen Übertragungssystems mit Hilfe des Netzmanagementsystem möglich. Im Fehlerfall kann somit rasch und vor allem ohne erheblichen Aufwand eine Fehlerlokalisation bzw. Fehlerbehebung durchgeführt werden.

Die durch die Ausführungsbeispiele in **Figur 1/2/3** erläuterte ertindungsgemäße optische Steckverbindung ist nicht jeweils auf das Vorsehen von ausschließlich flexiblen optischen Verbindungsleitern oder optischen Steckvorrichtungen beschränkt, sondern es können auch Kombinationen der in den Ausführungsbeispielen erläuterten Funktionseigenschaften insbesondere die Kombination von flexiblen und "starren" Verbindungsleitern, d.h. optische Steckvorrichtungen, in einem Netzelement NE vorgesehen sein.

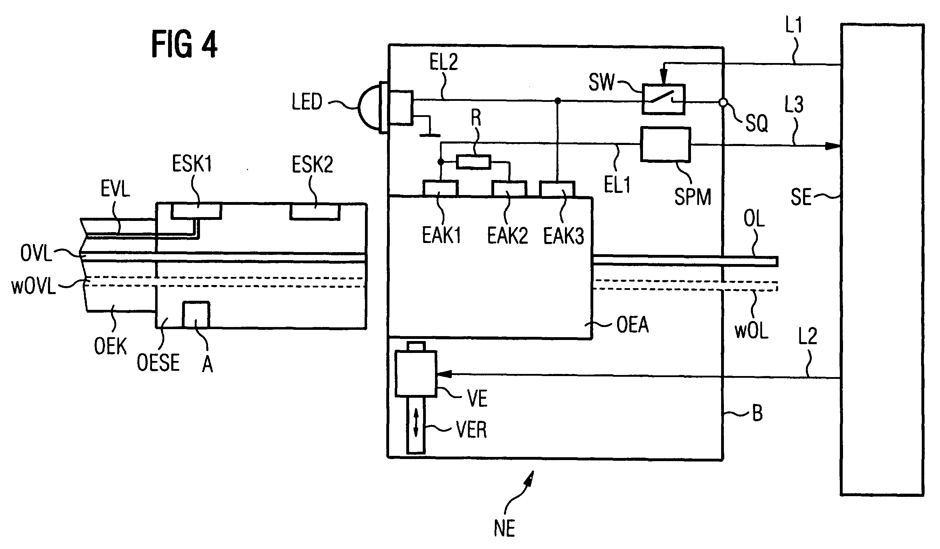

In **Figur 4** ist beispielhaft eine spezielle Ausgestaltung einer optischen Steckverbindung zwischen einem opto-elektrischen verbindungskabel OEK und einer Buchse B eines Netzelements NE im gelösten Zustand dargestellt. Das opto-elektrische Verbindungskabel OEK weist an seinem einen Ende ein opto-elektrisches Steckelement OESE bestehend aus einem ersten optischen Verbindungsleiter OVL, einem zweiten optischen Verbindungsleiter wOVL, einem elektrischen Verbindungsleiter EVL, zweier Prüfkontakte ESK1, ESK2 und einer Aufnahmevorrichtung A auf. Die erfindungsgemäße Buchse B des optische Netzelements NE weist einen opto-elektrischen Anschluß OEA, eine Leuchtanzeige LED, eine Verriegelungseinrichtung VE, einen ersten optischen Leiter OL, einen zweiten optischen Leiter wOL, zwei elektrische Leiter EL1, EL2, Prüfkontakte EAK1, EAK2, EAK3 und Leiter L1 - L3 zur Übertragung der Konfigurationssignale KS auf. Die Steuereinheit SE ist durch einen Leiter L3 mit einem Spannungsmesser SPM verbunden. Der Spannungsmesser SPM ist durch einen elektrischen Leiter EL1 mit den beiden Prüfkontakten EAK1, EAK2 verbunden, wobei zwischen den Prüfkontakten EK1, EK2 ein Widerstand R angebracht ist. Darüber hinaus ist die Leuchtanzeige LED durch einen elektrischen Leiter EL2 über einen Schalter SW mit einer Spannungsquelle SQ verbunden. Die Steuereinheit SE ist durch den Leiter L1 einerseits mit dem Schalter SW, andererseits über den Leiter L2 mit einer Verriegelungseinrichtung VE verbunden.

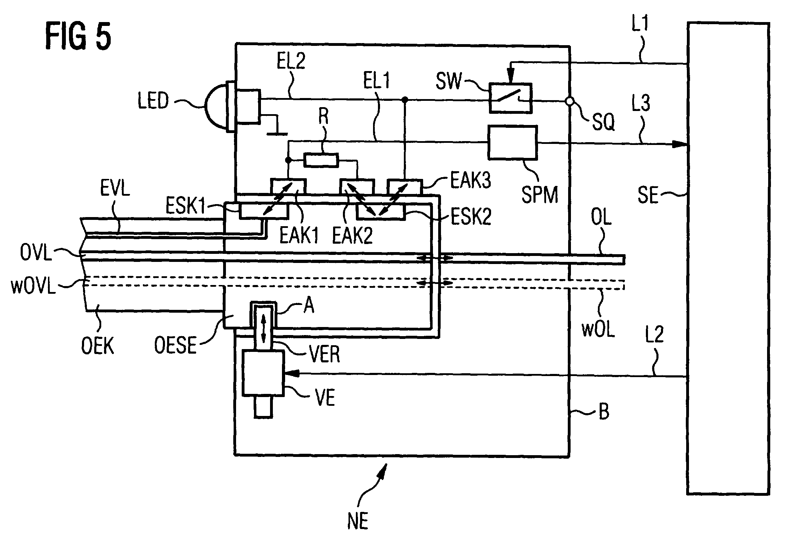

Analog zu **Figur 4** stellt **Figur 5** einen optische Steckverbindung zwischen einem opto-elektrischen Verbindungskabel OEK und einer Buchse B eines Netzelements NE im gesteckten Zustand dar. Das opto-elektrische Steckelement OESE des Verbindungskabels OEK ist in der Buchse B des Netzelements NE so eingebracht, daß der Prüfkontakt ESK1 mit dem Prüfkontakt EAK1 und der Prüfkontakt ESK2 mit den Prüfkontakten EAK2, EAK3 verbunden ist. In gestecktem Zustand ist eine optische Verbindung zwischen dem ersten optischen Verbindungsleiter OVL und dem ersten optischen Leiter OL sowie zwischen dem zweiten optischen Verbindungsleiter wOVL und dem zweiten optischen Leiter wOL hergestellt.

Durch den beispielhaft in **Figur 4** und **Figur 5** dargestellten Steckvorgang wird ein opto-elektrisches Verbindungskabel OEK in einer Buchse B eines Netzelements verriegelt. Dabei wird die Verriegelungseinheit VE über die Zentraleinheit SE gesteuert. Die Verriegelungseinheit VF verriegelt bei gestecktem opto-elektrischen Steckelement OESE den opto-elektrischen Anschluß OEA, so daß das opto-elektrische Steckelement OESE nicht mehr gelöst werden kann. Die Verriegelung erfolgt durch das Verschieben eines verriegelungseinrichtungsriegels VER von einer Offenposition in eine Schließposition indem der Verriegelungseinrichtungsriegel bzw. der Riegel des Verschiebeelements VER in die Aussparung A des opto-elektrischen Steckelements OESE verschoben wird und damit verriegelt.

Zum Herstellen oder zum Lösen einer optischen Steckverbindung stellt die erfindungsgemäße Ausführungsform eine visuell-mechanisches Sicherungssystem zur Verfügung. Durch die zentrale Steuerungseinheit SE kann der Konfigurationszustand des optischen Netzelements NE bestimmt und kontrolliert werden. Durch die erfindungsgemäße Ausführungsform können darüber hinaus neue fehlerhafte Kontiguratonszustände vermieden werden.

Soll eine gesteckte optische Steckverbindung gelöst werden, so schließt die zentrale Steuereinheit SE mittels eines Signals über den Leiter L1 den Schalter SW, dadurch zeigt die Leuchtanzeige LED die zu lösende optische Steckverbindung an, die zentrale SE sendet gleichzeitig ein Signal über den Leiter L2 an die Verriegelungseinheit VE, die das in der Buchse B steckende opto-elektrische Steckelement OESE entriegelt. Durch das nun mögliche Lösen des opto-elektrischen Steckelements OESE wird die über die Prüfkontakte ESK1, ESK2, EAK1 - EAK3 bestehende elektrische Leitung EL1, EL2 unterbrochen, der Spannungsmesser SPM zeigt einen 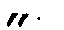 Nullpegel" an und gibt ein Konfigurationssignal KS über den Leiter L3 an die zentrale Steuereinheit SE. Die zentrale Steuereinheit SE weiß nun, daß die richtige optische Steckverbindung gelöst wurde, öffnet den Schalter SW mittels eines Signals durch den Leiter L1 wieder, wodurch die Leuchtanzeige LED deaktiviert wird und veranlaßt mittels des Leiters L2 die Verriegelungseinheit VE den opto-elektrische Anschluß OEA zu verriegeln.

Analog zum Lösen der optischen Steckverbindung ist der Vorgang des Steckens der optischen Steckverbindung. Nachdem die Leuchtanzeige LED die richtige zu steckende Buchse B angezeigt hat, wird gleichzeitig der opto-elektrische Anschluß OEA entriegelt. Das opto-elektrische Steckelement OESE kann nun in den opto-elektrischen Anschluß OEA eingeführt werden, der Spannungsmesser SPM zeigt nun einen 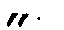 Einspegel" an wodurch das zentrale Steuerelement SE erkennt, daß das richtige opto-elektrische Steckelement OESE in den richtigen optoelektrischen Anschluß OEA gesteckt wurde. Das zentrale Steuerelement SE veranlaßt die Verriegelungeinrichtung VE das opto-elektrische Steckelement OESE zu verriegeln und die Leuchtanzeige LED zu deaktivieren.

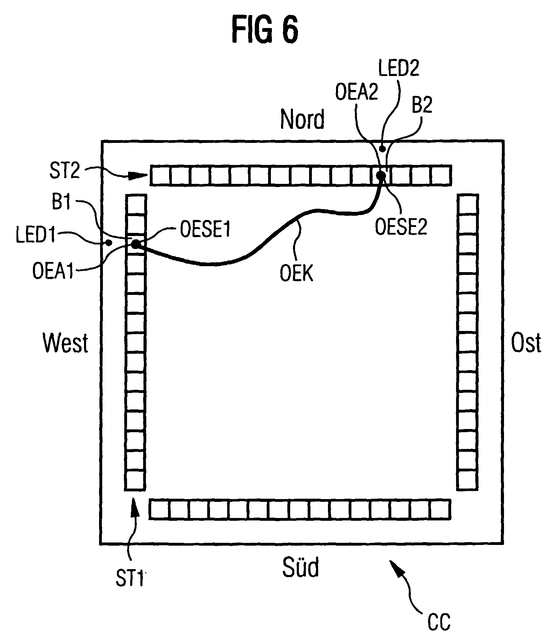

**Figur 6** zeigt einen prinzipiellen Aufbau eines Crossconnects CC mit optischen Steckfeldern. Eine beispielhafte Anwendung der erfindungsgemäßen optischen Steckverbindungen ist die manuelle Verschaltung von Feldern eines optischen Crossconnects CC mittels eines opto-elektrischen Verbindungskabels OEK. An einem optischen Crossconnect CC sind beispielhaft Steckfelder (West, Nord, Ost, Süd) vorgesehen. Die Steckfelder weisen ihrerseits wiederum eine linearen Aneinanderreihung von Buchsen B auf. Eine Buchse B1 aus dem Steckfeld West ST1 ist mit einer Buchse B2 aus dem Steckfeld Nord ST2 verschaltet. Die Verschaltung erfolgt durch das opto-elektrisches Verbindungskabel OEK, daß an jedem Ende ein opto-elektrisches Steckelement OESE1, OESE2 aufweist. Die opto-elektrischen Steckelemente OESE1, OESE2 werden mit dem opto-elektrischen Anschluß OEA1 der Buchse B1 im Steckfeld West und dem opto-elektrischen Anschluß OEA2 der Buchse B2 im Steckfeld Nord verbunden.

Zum Herstellen oder Lösen der richtigen optischen Steckverbindungen auf den optischen Steckfeldern müssen die richtigen optischen Steckverbindungen kenntlich gemacht und das Stecken der falschen optischen Verbindungen verhindert werden.

Sollen auf den optischen Steckfeldern eines Crossconnects CC eine bestehende Verschaltung zwischen zwei Buchsen B1, B2 der optischen Steckfelder ST1, ST2 gelöst werden, so macht die zentrale Steuereinheit SE die manuell zu lösende Verschaltung durch Leuchtanzeigen LED1, LED2 sichtbar und entriegelt die opto-elektrischen Anschlüsse OEA1, OEA2 der Buchsen B1, B2 durch das entriegeln der Verriegelungseinrichtung VE1, VE2. Nach Ziehen des ersten opto-elektrischen Steckelements OESE1 wird die elektrische Leitung EL1 über die Prüfkontakte ESK1, ESK2, EAK1 - EAK3 unterbrochen, der Spannungsmesser SPM zeigt einen 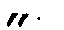 Nullpegel" an. Die zentrale Steuereinheit SE registriert, daß der richtige Stecker gezogen wurde, deaktiviert die Leuchtanzeige LED1 und verriegelt durch die Verriegelungseinrichtung VE1 den opto-elektrischen Anschluß OEA1 wieder, damit er vor fehlerhaftem Stecken geschützt ist. Analog verhält es sich mit dem Lösen des zweiten opto-elektrischen Steckelements OESE2 an dem zweiten opto-elektrischen Anschluß OEA2. Die zentrale Steuereinheit SE erkennt, daß die beiden richtigen optischen Steckverbindungen gelöst wurden und geht zurück in den Ausgangszustand. Die zentrale Steuereinheit ist damit für neue Rekonfigurierungsmaßnahmen bereit.

Sollen auf den optischen Steckfeldern eines Crossconnects CC zwei Buchsen B1, B2 miteinander verbunden werden, so macht die zentrale Steuereinheit SE die manuell zu verbindenden Buchsen B1, B2 der optischen Steckfelder durch Leuchtanzeige LED1, LED2 sichtbar und entriegelt die opto-elektrischen Anschlüsse OEA1, OEA2 der jeweiligen Buchsen B1, B2. Durch Stecken des ersten opto-elektrischen Steckelements OESE1 wird über die Prüfkontakte ESK1, ESK2, EAK1 - EAK3 der ersten optischen Verbindung ein elektrischer Kontakt hergestellt, der Spannungsmesser SPM zeigt einen 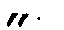 Einspegel" an, das zentrale Steuerelement SE registriert, daß das opto-elektrische Steckelement OESE1 in den Anschluß OEA1 gesteckt wurde, verriegelt die gesteckte optische Verbindung durch die Verriegelungseinrichtung VE1 gegen unerwünschtes Lösen und signalisiert über die Leuchtanzeige LED1 einen Zwischenzustand (z. B. durch Blinken). Durch Stecken des zweiten opto-elektrischen Steckelements OESE2 in den opto-elektrischen Anschluß OEA2 wird ein elektrischer Kontakt über die Prüfkontakte ESK1, ESK2, EAK1 - EAK3 und eine optischen Verbindung hergestellt. Dadurch zeigt der Spannungsmesser SPM einen Pegel zwischen dem 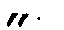 Einspegel" und dem 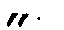 Nullpegel" an, der dadurch verursacht wird, daß eine elektrische Verbindung über eine elektrische Verbindungsleitung EVL im opto-elektrischen Verbindungskabel OEK zu dem ersten optischen Steckverbindung besteht und eine Spannung über den Widerstand R abfällt. Die zentrale Steuereinheit LSE erkennt dadurch, daß das erste opto-elektrische Steckelement OESE1 mit dem zweiten optoelektrischen Steckelement OESE2 verbunden ist, deaktiviert die Leuchtanzeigen LED1, LED2 und verriegelt durch die Verriegelungseinrichtung VE2 den opto-elektrischen Anschluß OEA2.

Die Erfindung stellt somit eine optische Steckverbindung zwischen zwei jeweils einen optischen Anschluß (OA1,OA2) aufweisenden optischen Leitern (OL1,OL2) bereit, wobei zusätzlich zu der optischen Steckverbindung eine elektrische Verbindung zur Verifizierung der optischen Steckverbindung vorgesehen ist. Dadurch wird die Wahrscheinlichkeit einer fehlerhaft im Netzmanagementsystem (NMS) erfaßten, optischen Steckverbindung erheblich verringert und die Fehlerlokalisation innerhalb des optischen Übertragungssystem erleichtert.

## Patentansprüche

1. Optische Steckverbindung zwischen zwei jeweils einen optischen Anschluß (OA1,OA2) aufweisenden optischen Leitern (OL1,OL2),
**dadurch gekennzeichnet,**
daß zusätzlich zu der optischen Steckverbindung eine elektrische Verbindung zur Verifizierung der optischen Steckverbindung vorgesehen ist und
daß in dem optischen Netzelement (NE) und/oder im Netzmanagementsystem (NMS) mit Hilfe der elektrischen Verbindung die Konfiguration der optischen Steckverbindung visualisiert wird.

2. Optische Steckverbindung nach Anspruch 1,
**dadurch gekennzeichnet,**
daß die elektrische Verbindung annähernd gleichzeitig mit Hilfe der optischen Steckverbindung hergestellt oder unterbrochen wird.

3. Optische Steckverbindung nach einem der Ansprüche 1 oder 2,
**dadurch gekennzeichnet,**
daß mit der optischen Steckverbindung ein elektrischer Verbindungsleiter (EVL) mit Steckelementen (ESE1,ESE2) geführt ist,
daß mit dem optischen Leiter (OL1,OL2) jeweils ein elektrischer Leiter mit Gegensteckelementen (GSE1,GSE2) geführt ist, und
daß im gesteckten Zustand der optischen Steckverbindung die elektrische Verbindung zwischen den elektrischen Leitern (EL1,EL2) durch den elektrischen Verbindungsleiter (EVL) hergestellt wird.

4. Optische Steckverbindung nach einem der Ansprüche 1 bis 3, **dadurch gekennzeichnet,**
daß außerhalb der optischen Steckverbindung eine elektrische, durch zumindest ein Steckelement (ESE) schaltbare Verbindung geführt ist, und
daß die optische Steckverbindung derart ausgestaltet ist, daß im geschalteten Zustand der optischen Steckverbindung das zumindest eine Steckelement (ESE) betätigt und die elektrische Verbindung hergestellt oder unterbrochen wird.

5. Optische Steckverbindung nach einem der Ansprüche 1 bis 4, **dadurch gekennzeichnet,**
daß Mittel zum Übertragen eines Konfigurationssignals (KS) über die elektrische Verbindung vorgesehen sind, wobei ein übermitteltes bzw. ein nicht übermitteltes Konfigurationssignal (KS) eine optische Steckverbindung anzeigt.

6. Optische Steckverbindung nach einem der Ansprüche 1 bis 5, **dadurch gekennzeichnet**,
daß bei einer oder mehreren optischen, jeweils zwei optische Leiter (OL1,OL2) verbindenden Steckverbindungen eine Steuereinheit (SE) zur Erfaßung, Speicherung und Auswertung der übertragenen bzw. nicht übertragenen Konfigurationssignale (KS) vorgesehen ist.

7. Optische Steckverbindung nach einem der Ansprüche 5 oder 6,
**dadurch gekennzeichnet,**
daß bei mehreren optischen, jeweils zwei optische Leiter (OL1,OL2) verbindenden Steckverbindungen Mittel zur leitungstechnischen Konzentration (LK1,LK2) der Konfigurationssignale (KS) vorgesehen sind.

8. Optische Steckverbindung nach einem der Ansprüche 1 bis 7, **dadurch gekennzeichnet,**
daß die optische Verbindung in einem Netzelement (NE) eines optischen Übertragungssystems vorgesehen ist.

9. Optische Steckverbindung nach einem der vorhergehenden Ansprüche,
**dadurch gekennzeichnet,**
daß eine verriegelungseinrichtung (VE) vorgesehen ist, mit der das optische Steckelement (OSE) und/oder das elektrische Steckelement (ESE) in dem opto-elektrischen Anschluß (OA) und/oder in dem elektrischen Anschluß (EA) verriegelbar ist, insbesondere das opto-elektrische Steckelement (OESE) in dem opto-elektrischen Anschluß (OEA) verriegelbar ist.

10. Optische Steckverbindung nach Anspruch 9,
**dadurch gekennzeichnet,**
daß der Verriegelungsvorgang durch die Steuereinheit (SE) steuerbar ist.

11. Optische Steckverbindung nach einem der vorhergehenden Ansprüche,
**dadurch gekennzeichnet,**
daß die zu steckenden und zu lösenden optischen Steckverbindungen durch zu den optischen Anschlüssen (OA), den elektrischen Anschlüssen (EA) und/oder den opto-elektrischen Anschlüssen (OEA) korrespondierenden Leuchtanzeigen (LED) visualisierbar sind.

12. Verfahren zum Lösen oder Stecken einer optischen Steckverbindung nach einem der Ansprüche 1 bis 11,
**dadurch gekennzeichnet,**
daß die Verriegelungseinrichtung (VE) der zu lösenden oder zu steckenden Verbindungen geöffnet wird,
und
daß die Verriegelungseinrichtung (VE) der zu lösenden oder der zu steckenden Verbindung nach Ziehen bzw. nach Stecken der Verbindung geschlossen wird.

13. Verfahren zur Lösen oder Stecken einer optischen Steckverbindung nach einem der Ansprüche 1 bis 12,
**dadurch gekennzeichnet,**
daß zum Lösen und/oder zum Stecken der optischen Steckverbindung die zu lösenden oder zu steckenden Verbindungen angezeigt werden.
